# EUROPEAN PATENT APPLICATION

(11) **EP 4 694 411 A1**
(43) Date of publication of application: **11.02.2026**
(21) Application number: 23929139.6
(22) Date of filing: 27.03.2023
(51) Int. Cl.: H04W 64/00

(54) **POSITIONING METHOD, APPARATUS, DEVICE, CHIP SYSTEM, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Gunzelmann, Rainer
(86) International application number: PCT/CN2023/084191
(87) International publication number: WO 2024/197538

(57) **Abstract**

Disclosed in embodiments of the present disclosure are a positioning method, an apparatus, a device, a chip system, and a storage medium, applicable to a communication system. The method comprises: a first node sends information of a mobile transmission - reception point (TRP) to a second node, wherein the information of the mobile TRP is used for determining the position of a terminal device. By implementing the method of the present disclosure, the timeliness of acquiring information of a mobile TRP can be effectively improved, and the positioning effect is improved.

## Description

### TECHNICAL FIELD

The disclosure relates to the field of communication technology, in particular to a positioning method, an apparatus, a device, a chip system and a storage medium.

### BACKGROUND

Currently, in new radio (NR) systems, integrated access and backhaul (IAB) supports millimeter wave base stations in wireless access and backhaul, which effectively reduces the need for additional optical fiber deployment when deploying dense networks, thus making a wireless relay feasible within next generation radio access networks (NG-RAN). Within the system, a relay node is called an IAB-node, supporting both wireless access and backhaul via NR. A terminate node for network side NR backhauls called an IAB-donor, which is a gNB (5G base station) with additional IAB functionality. Backhaul can be done via a single hop or multiple hops.

### SUMMARY

The embodiments of the disclosure provide a positioning method, an apparatus, a device, a chip system, a storage medium, a computer program and a computer program product, which are applicable to the field of communication technology and can effectively improve the timeliness of acquisition of information on a mobile transmission and reception point (TRP) and improve the positioning effect.

According to a first aspect of embodiments of the disclosure, a positioning method is provided. The method is performed by a first node, and includes: sending information of a mobile TRP to a second node, in which the information of the mobile TRP is used to determine a position of a user equipment (UE).

According to a second aspect of embodiments of the disclosure, a positioning method is provided. The method is performed by a second node, and includes: receiving information of a mobile TRP sent by a first node; and determining a position of a UE based on the information of the mobile TRP.

According to a third aspect of embodiments of the disclosure, a positioning method is provided. The method is performed by a third node, and includes: determining second information for updating a TRP, in which the second information for updating the mobile TRP is used for a first node to send information of the mobile TRP, and the information of the mobile TRP is used for determining a position of a UE.

According to a fourth aspect of embodiments of the disclosure, a positioning method is provided. The method is performed by a fourth node, and includes: determining information of a TRP, in which the information of the mobile TRP is used for determining a position of a UE.

According to a fifth aspect of embodiments of the disclosure, a communication apparatus is provided. The communication apparatus has an ability to implement part or all of the functions of the first node in the method described in the first aspect. For example, the communication apparatus may have functions of some or all of the embodiments of the disclosure, or may have a function of independently implementing any embodiment of the disclosure. The functions can be implemented by hardware or by executing corresponding software using the hardware. The hardware or software includes one or more units or modules corresponding to the above functions.

In an embodiment of the disclosure, the communication apparatus includes: a transceiver module and a processing module. The processing module is configured to support the communication apparatus to implement corresponding functions in the above method. The transceiver module is configured to support communications between the communication apparatus and other devices. The communication apparatus may include a storage module coupled to the transceiver module and the processing module, which is configured to store necessary computer programs and data for the communication apparatus.

As an example, the processing module may be a processor, the transceiver module may be a transceiver or a communication interface, and the storage module may be a memory.

According to a sixth aspect of embodiments of the disclosure, a communication apparatus is provided. The communication apparatus has an ability to implement part or all of the functions of the second node in the method described in the second aspect. For example, the communication apparatus may have functions of some or all of the embodiments of the disclosure, or may have a function of independently implementing any embodiment of the disclosure. The functions can be implemented by hardware or by executing corresponding software using the hardware. The hardware or software includes one or more units or modules corresponding to the above functions.

In an embodiment of the disclosure, the communication apparatus includes: a transceiver module and a processing module. The processing module is configured to support the communication apparatus to implement corresponding functions in the above method. The transceiver module is configured to support communications between the communication apparatus and other devices. The communication apparatus may include a storage module coupled to the transceiver module and the processing module, which is configured to store necessary computer programs and data for the communication apparatus.

According to a seventh aspect of embodiments of the disclosure, a communication apparatus is provided. The communication apparatus has an ability to implement part or all of the functions of the third node in the method described in the third aspect. For example, the communication apparatus may have functions of some or all of the embodiments of the disclosure, or may have a function of independently implementing any embodiment of the disclosure. The functions can be implemented by hardware or by executing corresponding software using the hardware. The hardware or software includes one or more units or modules corresponding to the above functions.

In an embodiment of the disclosure, the communication apparatus includes: a transceiver module and a processing module. The processing module is configured to support the communication apparatus to implement corresponding functions in the above method. The transceiver module is configured to support communications between the communication apparatus and other devices. The communication apparatus may include a storage module coupled to the transceiver module and the processing module, which is configured to store necessary computer programs and data for the communication apparatus.

According to an eighth aspect of embodiments of the disclosure, a communication apparatus is provided. The communication apparatus has an ability to implement part or all of the functions of the fourth node in the method described in the fourth aspect. For example, the communication apparatus may have functions of some or all of the embodiments of the disclosure, or may have a function of independently implementing any embodiment of the disclosure. The functions can be implemented by hardware or by executing corresponding software using the hardware. The hardware or software includes one or more units or modules corresponding to the above functions.

In an embodiment of the disclosure, the communication apparatus includes: a transceiver module and a processing module. The processing module is configured to support the communication apparatus to implement corresponding functions in the above method. The transceiver module is configured to support communications between the communication apparatus and other devices. The communication apparatus may include a storage module coupled to the transceiver module and the processing module, which is configured to store necessary computer programs and data for the communication apparatus.

According to a ninth aspect of embodiments of the disclosure, a communication device is provided. The communication device includes: a processor. When the processor calls a computer program stored in a memory, the method described in the first aspect above is implemented.

According to a tenth aspect of embodiments of the disclosure, a communication device is provided. The communication device includes: a processor. When the processor calls a computer program stored in a memory, the method described in the second aspect above is implemented.

According to an eleventh aspect of embodiments of the disclosure, a communication device is provided. The communication device includes: a processor. When the processor calls a computer program stored in a memory, the method described in the third aspect above is implemented.

According to a twelfth aspect of embodiments of the disclosure, a communication device is provided. The communication device includes: a processor. When the processor calls a computer program stored in a memory, the method described in the fourth aspect above is implemented.

According to a thirteenth aspect of embodiments of the disclosure, a communication device is provided. The communication device includes: a processor and a memory having a computer program stored therein. When the processor executes the computer program stored in the memory, the communication device is caused to implement the method described in the first aspect above.

According to a fourteenth aspect of embodiments of the disclosure, a communication device is provided. The communication device includes: a processor and a memory having a computer program stored therein. When the processor executes the computer program stored in the memory, the communication device is caused to implement the method described in the second aspect above.

According to a fifteenth aspect of embodiments of the disclosure, a communication device is provided. The communication device includes: a processor and a memory having a computer program stored therein. When the processor executes the computer program stored in the memory, the communication device is caused to implement the method described in the third aspect above.

According to a sixteenth aspect of embodiments of the disclosure, a communication device is provided. The communication device includes: a processor and a memory having a computer program stored therein. When the processor executes the computer program stored in the memory, the communication device is caused to implement the method described in the fourth aspect above.

According to a seventeenth aspect of embodiments of the disclosure, a communication device is provided. The communication device includes: a processor and an interface circuit. The interface circuit is used for receiving code instructions and transmitting the code instructions to the processor, and the processor is used for running the code instructions to cause the device to implement the method of the first aspect.

According to an eighteenth aspect of embodiments of the disclosure, a communication device is provided. The communication device includes: a processor and an interface circuit. The interface circuit is used for receiving code instructions and transmitting the code instructions to the processor, and the processor is used for running the code instructions to cause the device to implement the method of the second aspect.

According to a nineteenth aspect of embodiments of the disclosure, a communication device is provided. The communication device includes: a processor and an interface circuit. The interface circuit is used for receiving code instructions and transmitting the code instructions to the processor, and the processor is used for running the code instructions to cause the device to implement the method of the third aspect.

According to a twentieth aspect of embodiments of the disclosure, a communication device is provided. The communication device includes: a processor and an interface circuit. The interface circuit is used for receiving code instructions and transmitting the code instructions to the processor, and the processor is used for running the code instructions to cause the device to implement the method of the fourth aspect.

According to a twenty-first aspect of embodiments of the disclosure, a communication system is provided. The system includes the communication apparatus of the fifth aspect, the communication apparatus of the sixth aspect, the communication apparatus of the seventh aspect and the communication apparatus of the eighth aspect. Or, the system includes the communication device of the ninth aspect, the communication device of the tenth aspect, the communication device of the eleventh aspect and the communication device of the twelfth aspect. Or, the system includes the communication device of the thirteenth aspect, the communication device of the fourteenth aspect, the communication device of the fifteenth aspect and the communication device of the sixteenth aspect. Or, the system includes the communication device of the seventeenth aspect, the communication device of the eighteenth aspect, the communication device of the nineteenth aspect and the communication device of the twentieth aspect.

According to a twenty-second aspect of embodiments of the disclosure, a computer-readable storage medium is provided. The computer-readable storage medium is used for storing instructions for the first node, the second node, the third node and the fourth node. When the instructions are executed, the first node, the second node, the third node and the fourth node are caused to implement the above methods.

According to a twenty-third aspect of embodiments of the disclosure, a computer program product including computer programs is provided. When the computer programs are running on a computer, the computer is caused to implement the methods described above.

According to a twenty-fourth aspect of embodiments of the disclosure, a chip system is provided. The chip system includes at least one processor and an interface for supporting the first node to implement the functions involved in the first aspect, for example, determining or processing at least one of data or information involved in the above method.

In a possible design, the chip system includes a memory, which is used for storing necessary computer programs and data for the first node. The chip system consists of chips or chips and other discrete components.

According to a twenty-fifth aspect of embodiments of the disclosure, a chip system is provided. The chip system includes at least one processor and an interface for supporting the second node to implement the functions involved in the second aspect, for example, determining or processing at least one of data or information involved in the above method.

In a possible design, the chip system includes a memory, which is used for storing necessary computer programs and data for the second node. The chip system consists of chips or chips and other discrete components.

According to a twenty-sixth aspect of embodiments of the disclosure, a chip system is provided. The chip system includes at least one processor and an interface for supporting the third node to implement the functions involved in the third aspect, for example, determining or processing at least one of data or information involved in the above method.

In a possible design, the chip system includes a memory, which is used for storing necessary computer programs and data for the third node. The chip system consists of chips or chips and other discrete components.

According to a twenty-seventh aspect of embodiments of the disclosure, a chip system is provided. The chip system includes at least one processor and an interface for supporting the fourth node to implement the functions involved in the fourth aspect, for example, determining or processing at least one of data or information involved in the above method.

In a possible design, the chip system includes a memory, which is used for storing necessary computer programs and data for the fourth node. The chip system consists of chips or chips and other discrete components.

According to a twenty-eighth aspect of embodiments of the disclosure, a computer program is provided. When the computer program is running on a computer, the computer is caused to implement the above methods.

In conclusion, the positioning method, the apparatus, the device, the chip system, the storage medium, the computer program and the computer program product provided by the embodiments of the disclosure can achieve the following technical effects.

The first node sends the information of the TRP to the second node, in which the information of the mobile TRP is used to determine the position of the UE, so that the second node can obtain the information of the mobile TRP in a timely manner to determine the position of the UE based on the information of the mobile TRP, which can effectively improve the timeliness of acquisition of the information of the mobile TRP and improve the positioning effect.

### BRIEF DESCRIPTION OF THE DRAWINGS

In order to clearly illustrate the technical solutions of the embodiments of the disclosure or background technologies, a description of drawings used in the embodiments of the disclosure or the background technologies is given below.
FIG. 1a is an example schematic diagram 1 of an IAB architecture provided by an embodiment of the disclosure.
FIG. 1b is an example schematic diagram 2 of an IAB architecture provided by an embodiment of the disclosure.
FIG. 2 is a schematic flowchart of a positioning method provided by an embodiment of the disclosure.
FIG. 3 is a schematic flowchart of a positioning method provided by an embodiment of the disclosure.
FIG. 4 is a schematic flowchart of a positioning method provided by an embodiment of the disclosure.
FIG. 5 is a schematic flowchart of a positioning method provided by an embodiment of the disclosure.
FIG. 6 is a schematic flowchart of a positioning method provided by an embodiment of the disclosure.
FIG. 7 is a schematic flowchart of a positioning method provided by an embodiment of the disclosure.
FIG. 8 is a schematic flowchart of a positioning method provided by an embodiment of the disclosure.
FIG. 9 is a schematic flowchart of a positioning method provided by an embodiment of the disclosure.
FIG. 10 is a schematic flowchart of a positioning method provided by an embodiment of the disclosure.
FIG. 11 is a schematic flowchart of a positioning method provided by an embodiment of the disclosure.
FIG. 12 is a schematic flowchart of a positioning method provided by an embodiment of the disclosure.
FIG. 13 is a schematic flowchart of a positioning method provided by an embodiment of the disclosure.
FIG. 14 is a schematic flowchart of a positioning method provided by an embodiment of the disclosure.
FIG. 15 is a schematic structural diagram of a communication apparatus provided by an embodiment of the disclosure.
FIG. 16 is a schematic structural diagram of a communication device provided by an embodiment of the disclosure.
FIG. 17 is a schematic structural diagram of a chip according to an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the embodiments of the disclosure. Instead, they are merely examples of apparatuses and methods consistent with aspects related to the embodiments of the disclosure as recited in the attached claims.

The terms used in the embodiments of the disclosure are only for the purpose of describing specific embodiments, and are not intended to limit the embodiments of the disclosure. The singular forms of "a" and "the" used in the embodiments of the disclosure and the attached claims are also intended to include plural forms, unless the context clearly indicates other meanings. It should be understood that the term "and/or" as used herein refers to and includes any or all possible combinations of one or more associated listed items.

It is understandable that although the terms "first", "second" and "third" may be used in the embodiments of the disclosure to describe various information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein can be interpreted as "when", "while" or "in response to determining".

In related technologies, a node used for location management in a communication network is responsible for providing location services, such as a location management function (LMF) entity. A UE entering the connected state can communicate with the node used for location management via a long term evolution (LTE) positioning protocol (LPP). A base station and the node used for location management may communicate with each other via a NR positioning protocol A (NRPPa), and the node used for location management may obtain TRP information from the base station before positioning. The node used for location management may obtain TRP information from a mobile base station relay (MBSR) (i.e., an IAB-node) in advance. The TRP information may include a cell identity document (ID), an MBSR indication and/or an IAB mobile termination (IAB-MT) UE ID. The node used for location management may determine whether there is any MBSR involved in the process of locating the UE based on a cell ID list sent by the UE, and then determine a position of the UE based on a determination result.

In related technologies, distributed unit (DU) migration may occur for the MBSR (i.e., IAB-node), and the cell ID in the mobile TRP information may change correspondingly. If the node used for location management is notified to initiate a mobile TRP information interaction procedure again, the timeliness of obtaining the information of the mobile TRP may be reduced, which may lead to the inconsistency between the information stored in the network and the information measured by the UE, thereby affecting the positioning effect.

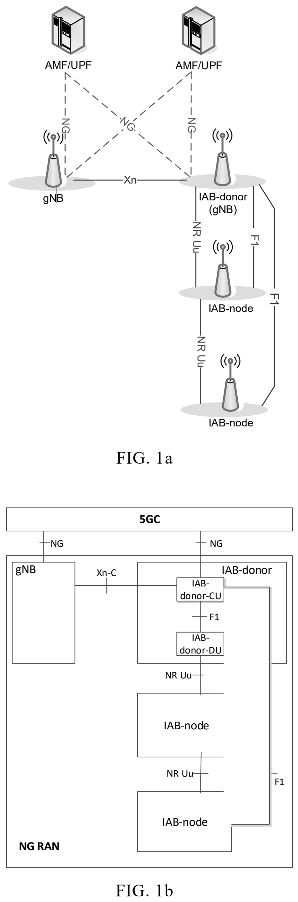

As illustrated in FIG. 1a and FIG. 1b, FIG. 1a is an example schematic diagram 1 of an IAB architecture provided by an embodiment of the disclosure. FIG. 1b is an example schematic diagram 2 of an IAB architecture provided by an embodiment of the disclosure. An NG-RAN supports IAB by wirelessly connecting to a gNB (IAB-donor) that is capable of serving an IAB-node. The IAB-donor includes an IAB-donor-central unit (CU) and one or more IAB-donor-DUs. When a gNB-CU-control plane (CP) and a gNB-CU-user plane (UP) are separated, the IAB-donor may include one IAB-donor-CU-CP, several IAB-donor-CU-UPs and several IAB-donor-DUs. The IAB-node is connected to an IAB-node or an IAB-donor-DU in the upstream via a UE function subset of an NR Uu interface (i.e., an IAB-MT function of IAB-node). The IAB-node provides wireless backhaul to an IAB-node in the downstream and a UE through a network function of an NR Uu interface (i.e., an IAB-DU function of the IAB-node). In FIG. 1a, AMF is the abbreviation of access and mobility management function, which means access and mobility management function in Chinese, and UDF is the abbreviation of user plane function, which means user plane function in Chinese.

A F1-C service between an IAB-node and an IAB-donor-CU is backhauled via an IAB-donor-DU and optional intermediate hop IAB-nodes. A F1-U service between an IAB-node and an IAB-donor-CU is backhauled via an IAB-donor-DU and optional intermediate hop IAB-nodes.

A positioning method and a positioning apparatus provided by the disclosure will be introduced in detail in combination with the accompanying drawings.

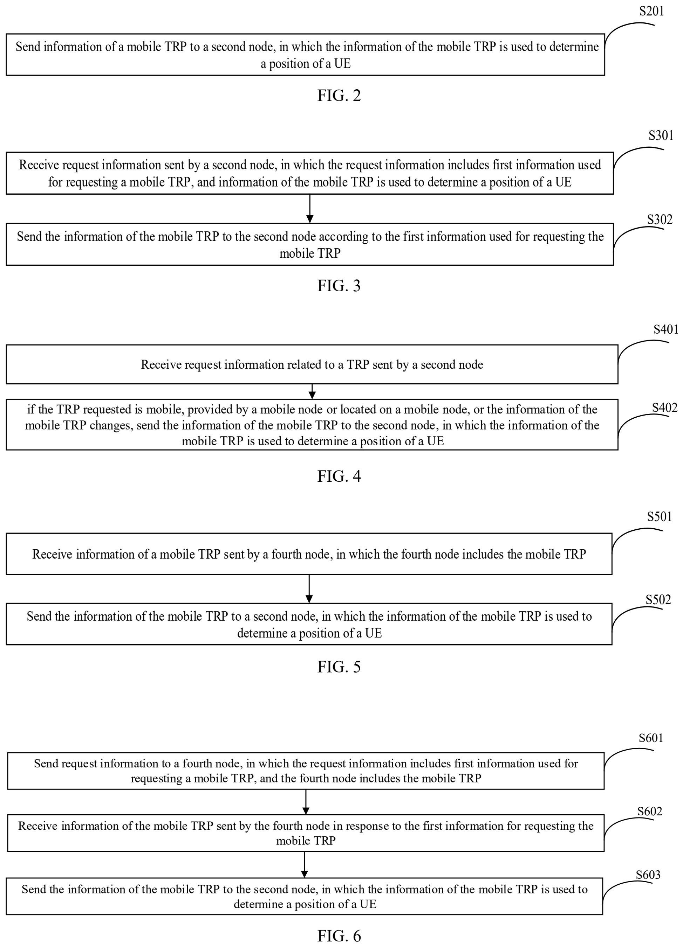

FIG. 2 is a schematic flowchart of a positioning method provided by an embodiment of the disclosure. It should be noted that the positioning method in the embodiment is performed by a first node, such as an NG-RAN node. The NG-RAN node may be, for example, an IAB-donor, which is not limited here. The method includes, but is not limited to, the following step.

At step S201, information of a TRP is sent to a second node, in which the information of the mobile TRP is used to determine a position of a UE.

In some embodiments, the second node may be a node for location management, which is responsible for providing location services, such as an LMF entity, which is not limited here.

In some embodiments, the mobile TRP refers to a TRP in motion, which is not limited here.

In some embodiments, the UE may obtain the information of the mobile TRP through an LMF for positioning, which is not limited here.

In some embodiments, the mobile TRP is located on a fourth node, which is not limited here.

In some embodiments, the UE may receive a positioning signal from the mobile TRP for a positioning signal measurement, which is not limited here.

In some embodiments, the mobile TRP may receive a positioning signal from the UE for a positioning signal measurement, which is not limited here.

In some embodiments, the information of the TRP refers to information related to the TRP, which is not limited here.

In some embodiments, the information of the mobile TRP includes at least one of: information of a mobile TRP corresponding to a cell ID in a cell ID list; updated information of the mobile TRP; information of an IAB-MT ID corresponding to the mobile TRP; motion state information; position information of the mobile TRP and/or a timestamp corresponding to the position information; or speed information of the mobile TRP and/or a timestamp corresponding to the speed information, which is not limited here.

In some embodiments, the updated information of the mobile TRP includes an LMF ID, a transaction ID, a TRP ID, an old NG-RAN node ID and/or an old TRP ID, which is not limited here.

In some embodiments, the information of the IAB-MT ID corresponding to the mobile TRP is used by the second node to determine corresponding position and/or speed information of the mobile TRP by obtaining a position and/or a speed information of the IAB-MT indicated by the information of the IAB-MT ID, which is not limited here.

In some embodiments, the information of the IAB-MT ID may be a global unique ID or a local unique ID, which is not limited here.

In some embodiments, if the information of the IAB-MT ID is a global unique ID, it may be a globally unique temporary UE identity (GUTI), a subscription permanent identifier (SUPI), a generic public subscription identifier (GPSI), or a 5th generation mobile communication technology -S-temporary mobile subscription identifier (5G-S-TMSI), which is not limited here.

In some embodiments, if the information of the IAB-MT ID is a local unique ID, it may be an RAN UE Next Generation Application Protocol ID (RAN UE NGAP ID), an AMF UE NG AP ID and/or an AMF ID, which is not limited here.

In some embodiments, the motion state information indicates whether the mobile TRP is in a motion state or a static state, which is not limited here.

In some embodiments, the position information of the mobile TRP may be an estimated position information obtained through a positioning process performed by an IAB-MT corresponding to the mobile TRP, which is not limited here.

In some embodiments, the speed information of the mobile TRP may be an estimated speed information obtained through a positioning process performed by an IAB-MT corresponding to the mobile TRP, which is not limited here.

In some embodiments, the information of the mobile TRP may be obtained from the fourth node, e.g., an IAB-node or a mobile IAB node, which is not limited here.

In some embodiments, during the process of determining the position of the UE by using the information of the mobile TRP, the position of the UE may be obtained based on the position of the mobile TRP, or the position of the UE may be calculated by performing a UE positioning process based on the information of the mobile TRP, which is not limited here.

Therefore, since the first node sends the information of the mobile TRP to the second node, and the information of the mobile TRP is used to determine the position of the UE, the second node can obtain the information of the mobile TRP in a timely manner and determine the position of the UE based on the information of the mobile TRP, which effectively improves the timeliness of acquisition of the information of the mobile TRP and improves the positioning effect.

FIG. 3 is a schematic flowchart of a positioning method provided by an embodiment of the disclosure. It should be noted that the positioning method in the embodiment is performed by a first node, such as an NG-RAN node. The NG-RAN node may be, for example, an IAB-donor, which is not limited here. The method includes, but is not limited to, the following steps.

At step S301, request information sent by a second node is received, in which the request information includes first information used for requesting a mobile TRP, and information of the mobile TRP is used to determine a position of a UE.

In some embodiments, the first node receives request information sent by the second node, and the request information includes first information for requesting the mobile TRP, which is not limited here.

In some embodiments, an IAB-donor receives request information sent by an LMF entity, and the request information includes first information for requesting the mobile TRP, which is not limited here.

At step S302, the information of the mobile TRP is sent to the second node according to the first information used for requesting the mobile TRP.

In some embodiments, the first node may receive the request information sent by the second node, and send the information of the mobile TRP to the second node according to the first information received from the second node for requesting the mobile TRP, which is not limited here.

Therefore, in an embodiment, the first node receives the request information sent by the second node, in which the request information includes the first information for requesting the mobile TRP, and the information of the mobile TRP is used for determining the position of the UE. Then, the first node sends the information of the mobile TRP to the second node according to the first information for requesting the mobile TRP, to realize on-demand transmission of the information of the mobile TRP, which effectively improves the timeliness of transmission of the information of the mobile TRP.

In the positioning method provided by the embodiment of the disclosure, the request information includes at least one of: a mobile TRP information request, a cell ID list, an update request indication, an IAB-MT ID request, a position information request or a speed information request. The mobile TRP information request indicate s a request for the information of the mobile TRP. The cell ID list includes at least one cell ID, and the cell ID list indicates a request for information of a mobile TRP corresponding to the at least one cell ID. The update request indication indicates a request for updated information of the mobile TRP. The IAB-MT ID request indicates a request for an IAB-MT ID corresponding to a TRP. The position information request indicates a request for geographic position information of the mobile TRP. The speed information request indicates a request for speed information of the mobile TRP.

In some embodiments, the mobile TRP information request may be an IAB-MT information request, which is not limited here.

In some embodiments, the mobile TRP information request may be requested as a type of TRP information, e.g., mobile TRP information.

In some embodiments, the update request indication indicates a request for updated information of the mobile TRP, which is not limited here.

In some embodiments, the update request indication indicates a request to provide updated information of the mobile TRP when a base station to which a TRP belongs changes and/or a TRP ID changes, which is not limited here.

In some embodiments, the update request indication indicates a request to provide updated information of the mobile TRP when a cell ID to which a TRP belongs changes, which is not limited here.

In some embodiments, the request information include at least one of:
a cell ID list, in which the cell ID list includes one or more cell IDs and indicates a request for information of a mobile TRP corresponding to a cell, and the cell ID is a cell global identity (CGI);
an update request indication, in which the update request indication indicates a request for updated information in response to a change of information;
an IAB-MT ID request, used to indicate a request for an IAB-MT ID;
a position information request, used to indicate a request for geographic position information of the mobile TRP; or
a speed information request, used to indicate a request for speed information of the mobile TRP, which is not limited here.

The cell ID list is an optional example of cell identification list, which is not limited here.

The request information is included in a first request message sent by the second node to the first node.

In some embodiments, if the first node is an NG-RAN node and the second node is an LMF, the first request message may be an NRPPa message sent by the LMF to the NG-RAN node.

In some embodiments, the NRPPa message may be a non-UE associated NRPPa message and/or a UE associated NRPPa message.

In some embodiments, the NRPPa message may be a TRP information request message and/or a measurement request message, which is not limited here.

In some embodiments, if request information is included in a TRP information request message, the request information may be a new type of TRP information, and the first node notifies a fourth node to perform a positioning procedure according to the new type of TRP information, to obtain position and/or speed information of the mobile TRP corresponding to the fourth node.

In some embodiments, if request information is included in a TRP information request message, the request information may be a new type of TRP information, and the first node feeds back the information of the mobile TRP to the second node according to the new type of TRP information.

In the positioning method provided by an embodiment of the disclosure, after receiving the request information sent by the second node, the first node indicates the fourth node to perform the positioning procedure or provide identification information of the fourth node to obtain the accurate position and/or speed information of the fourth node, and then determine the position and/or speed information of the mobile TRP on the fourth node (i.e., the mobile TRP corresponding to the fourth node), which is used for determining the position of the UE.

FIG. 4 is a schematic flowchart of a positioning method provided by an embodiment of the disclosure. It should be noted that the positioning method in the embodiment is performed by a first node, such as an NG-RAN node. The NG-RAN node may be, for example, an IAB-donor, which is not limited here. The method includes, but is not limited to, the following steps.

At step S401, request information related to a TRP sent by a second node is received.

In some embodiments, an IAB-donor (or NG-RAN node) receives a request message related to a TRP sent by an LMF entity, which is not limited here.

In some embodiments, a request message related to a TRP may include: information for requesting a TRP, or information for requesting a TRP to perform positioning-related operations (for example, sending and/or receiving positioning signals), which is not limited here.

In some embodiments, a request message related to a TRP sent by an LMF to an IAB-donor (or NG-RAN node) may be a TRP information request message and/or a measurement request message, which is not limited here.

At step S402, if the TRP requested is mobile, provided by a mobile node or located on a mobile node, or if the information of the mobile TRP changes, the information of the mobile TRP is sent to the second node, in which the information of the mobile TRP is used to determine a position of a UE.

In some embodiments, after receiving a request message related to a TRP sent by the second node, the first node can determine whether the requested TRP is mobile, or whether it is provided by a mobile node or whether it is on a mobile node (for example, on an IAB-node), or whether the information of the mobile TRP changes. If the requested TRP is mobile, or it is provided by the mobile node or is on the mobile node, or the information of the mobile TRP changes, the first node sends the information of the mobile TRP to the second node, so that the second node can determine the position of the UE according to the information of the mobile TRP, which is not limited here.

In some embodiments, in a case that the first node is an IAB-donor (or NG-RAN node) and the second node is an LMF, after the first node receives a request message related to a TRP from the second node, if the requested TRP is on the IAB -Node, or if it is determined that the requested TRP is mobile, the first node includes information of the mobile TRP in a feedback message, which is not limited here.

In some embodiments, the information of the mobile TRP changes, indicating that a base station serving the TRP changes and/or a TRP ID changes. For example, an IAB-node serving the mobile TRP is switched from a source donor-CU to a target donor-CU, and the ID of the mobile TRP is updated to an ID of a base station of the target donor-CU and a TRP ID allocated by the target donor-CU, which is not limited here.

Therefore, in an embodiment, after receiving the request message related to the TRP sent by the second node, if the requested TRP is mobile, or it is provided by the mobile node or is on the mobile node, or the information of the mobile TRP changes, the first node sends the information of the mobile TRP to the second node, which is used to determine the position of the UE, to realize on-demand transmission of the information of the mobile TRP, which effectively improves the timeliness of transmission of the information of the mobile TRP.

In the positioning method provided by the embodiment of the disclosure, the first node feeds back a first feedback message to the second node, which includes the information of the mobile TRP. Since the first feedback message is reused to send the information of the mobile TRP to the second node, a transmission overhead of the information of the mobile TRP can be reduced.

In some embodiments, the first feedback message may be a feedback message generated in response to the first request message, the request information sent by the second node, or the request message related to the TRP, which is not limited here.

In the positioning method provided by an embodiment of the disclosure, the first node sends a first update message to the second node, which includes the information of the mobile TRP. By directly sending the update message to the second node due to the change of information of the mobile TRP, the transmission overhead of the information of the mobile TRP can be reduced, which improves the efficiency of updating the information of the mobile TRP.

In some embodiments, the first update message is an update message generated by the first node in response to an update of the information of the mobile TRP after sending the first feedback message, which is not limited here.

FIG. 5 is a schematic flowchart of a positioning method provided by an embodiment of the disclosure. It should be noted that the positioning method in the embodiment is performed by a first node, such as an NG-RAN node. The NG-RAN node may be, for example, an IAB-donor, which is not limited here. The method includes, but is not limited to, the following steps.

At step S501, information of a mobile TRP sent by a fourth node is received, in which the fourth node includes the mobile TRP.

In some embodiments, the first node may receive the information of the mobile TRP sent by the fourth node, in which the fourth node includes the mobile TRP, which is not limited here.

In some embodiments, the information of the mobile TRP may be obtained from the fourth node, for example, an IAB-node or a mobile IAB node, which is not limited here.

In some embodiments, the first node may obtain the information of the mobile TRP from the fourth node and send the information of the mobile TRP to the second node, which is not limited here.

At step S502, the information of the TRP is sent to a second node, in which the information of the mobile TRP is used to determine a position of a UE.

In some embodiments, after receiving the information of the mobile TRP sent by the fourth node, the first node may send the information of the mobile TRP to the second node, which is used to determine the position of the UE, so that the second node can obtain the information of the mobile TRP in a timely manner, which improves the timeliness of acquisition of the information of the mobile TRP.

FIG. 6 is a schematic flowchart of a positioning method provided by an embodiment of the disclosure. It should be noted that the positioning method in the embodiment is performed by a first node, such as an NG-RAN node. The NG-RAN node may be, for example, an IAB-donor, which is not limited here. The method includes, but is not limited to, the following steps.

At step S601, request information is sent to a fourth node, in which the request information includes first information used for requesting a mobile TRP, and the fourth node includes the mobile TRP.

In some embodiments, the description of the first information for requesting the mobile TRP may refer to the above embodiments in detail, which will not be repeated here.

The request information is included in a second request message sent by the first node to the fourth node.

In some embodiments, if the first node is an IAB-donor (or an IAB-donor-CU) and a second node is an IAB-node, the first request message may be an F1 application protocol (F1AP) message sent by the IAB-donor-CU to the IAB-node, which is not limited here.

In some embodiments, the F1AP message may be a non-UE associated F1AP message and/or a UE associated F1AP message, which is not limited here.

In some embodiments, the F1AP message may be a TRP information request message and/or a measurement request message, which is not limited here.

In some embodiments, if request information is included in a TRP information request message, the request information may be a new type of TRP information, and the fourth node (or a UE portion on the fourth node) performs a positioning procedure according to the new type of TRP information to obtain position and/or speed information of a mobile TRP corresponding to the fourth node, which is not limited here.

In some embodiments, if request information is included in a TRP information request message, the request information may be a new type of TRP information, and the fourth node feeds back information of a mobile TRP to the first node according to the new type of TRP information, which is not limited here.

At step S602, information of the mobile TRP sent by the fourth node in response to the first information for requesting the mobile TRP is received.

In some embodiments, the information of the mobile TRP may be sent by the fourth node after receiving the first information for requesting the mobile TRP sent by the first node, which is not limited here.

In some embodiments, the information of the mobile TRP may be sent by the fourth node after determining that the requested TRP is mobile, which is not limited here.

At step S603, the information of the TRP is sent to the second node, in which the information of the mobile TRP is used to determine a position of a UE.

Therefore, the first node sends the request information to the fourth node. The request information includes the first information for requesting the mobile TRP, and the fourth node includes the mobile TRP. Then, the first node receives the information of the mobile TRP sent by the fourth node in response to the first information for requesting the mobile TRP, and sends the information of the mobile TRP to the second node, in which the information of the mobile TRP is used for determining the position of the UE. The second node can obtain the information of the mobile TRP in a timely manner, which improves the timeliness of acquisition of the information of the mobile TRP, thereby realizing on-demand acquisition of the information of the mobile TRP.

In the positioning method provided by the embodiment of the disclosure, the fourth node receives the request information sent by the first node, and then performs the positioning procedure or provides its identification information to obtain the accurate position and/or speed information of the fourth node, so that the position and/or speed information of the mobile TRP on the fourth node (i.e., the mobile TRP corresponding to the fourth node) can be determined and used for determining the position of the UE.

In the positioning method provided by the embodiment of the disclosure, the first node may also send the request message related to the TRP to the fourth node, and receive the information of the mobile TRP sent by the fourth node in response to determining that the requested TRP is mobile, or it is provided by the mobile node or is on the mobile node. The fourth node includes the mobile TRP.

In some embodiments, after receiving a request message related to a TRP sent by the first node, the fourth node can determine whether the TRP requested by th e first node is mobile, or whether it is provided by the mobile node or whether it is on the mobile node (for example, on an IAB-node), or whether the information of the mobile TRP changes. If the requested TRP is mobile, or it is provided by the mobile node or is on the mobile node, or the information of the mobile TRP changes, the fourth node sends the information of the TRP to the first node. Correspondingly, the first node receives the information of the mobile TRP sent by the fourth node in response to that the requested TRP is mobile, or it is provided by the mobile node or is on the mobile node, or the information of the mobile TRP changes, so as to determine the position of the UE based on the information of the mobile TRP, which is not limited here.

In the positioning method provided by the embodiment of the disclosure, the first node may receive a second feedback message sent by the fourth node, which includes the information of the mobile TRP. The fourth node may reuse the second feedback message to send the information of the mobile TRP to the first node, which can reduce a transmission overhead of the information of the mobile TRP.

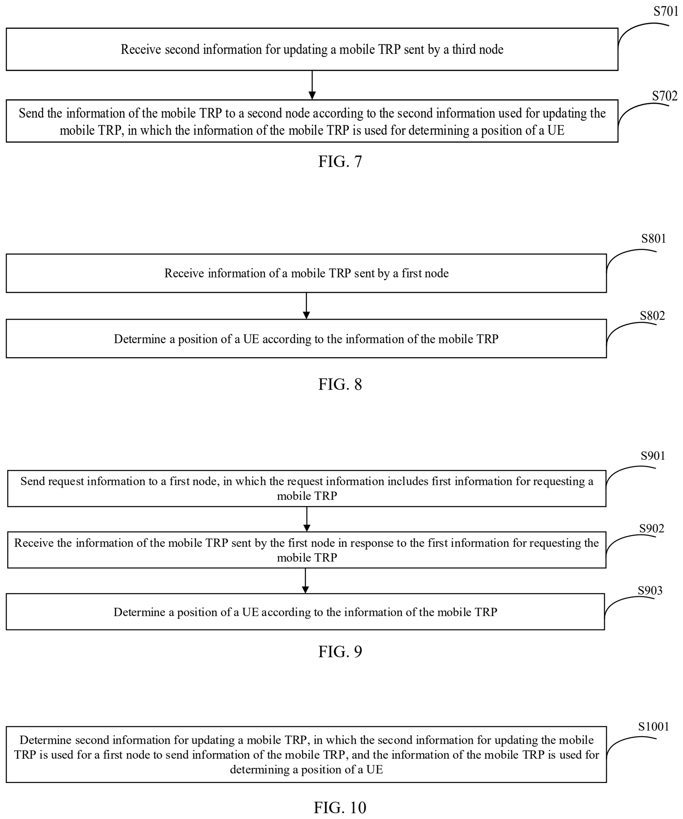

FIG. 7 is a schematic flowchart of a positioning method provided by an embodiment of the disclosure. It should be noted that the positioning method in the embodiment is performed by a first node, such as an NG-RAN node. The NG-RAN node may be, for example, an IAB-donor, which is not limited here. The method includes, but is not limited to, the following steps.

At step S701, second information for updating a mobile TRP sent by a third node is received.

In some embodiments of the disclosure, the second information for updating the mobile TRP may include an LMF node ID, used to indicate a node to which information of the mobile TRP needs to be sent; a transaction ID, used to indicate a transaction ID corresponding to a transmission of the information of the mobile TRP; an old NG-RAN node ID, used to indicate an old NG-RAN node ID corresponding to the information of the mobile TRP; and an old TRP ID, used to indicate one or more mobile TRP IDs corresponding to the information of the mobile TRP on an old NG-RAN node, which is not limited here.

In some embodiments, the third node is a source service IAB-donor-CU of a fourth node (for example, IAB-node) where the mobile TRP is located.

In some embodiments, the IAB-node where the mobile TRP is located undergoes DU migration, and the third node serving as a source IAB-donor-CU sends the second information for updating the mobile TRP to the first node serving as a target IB-donor-CU via an Xn application protocol (XnAP) message, which is not limited here.

In some embodiments, the XnAP message is a message for IAB-node or IAB-DU migration, which is not limited here.

In some embodiments, in response to receiving the second information for updating the mobile TRP sent by the third node, the first node sends a TRP information request to the fourth node, and receives the updated information of the mobile TRP from the fourth node. The specific process is the same as that in the above embodiments, which will not be repeated here.

In the disclosure, "in response to" and "if" may have the same meaning, which is not limited here.

At step S702, the information of the TRP is sent to a second node according to the second information used for updating the mobile TRP, in which the information of the mobile TRP is used for determining a position of a UE.

In some embodiments, after receiving the information of the mobile TRP sent by the fourth node, the first node may send the information of the TRP used for determining the position of the UE to the second node, so that the second node can obtain the information of the mobile TRP in a timely manner, which improves the timeliness of acquisition of the information of the mobile TRP.

It should be noted that in the following embodiments, descriptions and explanations of the same or corresponding terms as those in the above embodiments can refer to the above embodiments, which will not be repeated here.

FIG. 8 is a flowchart of a positioning method provided by an embodiment of the disclosure. It should be noted that the positioning method in the embodiment is performed by a second node, such as a node for location management. The node for location management may be a node responsible for providing location services, and the second node may be an LMF entity, which is not limited here. The method includes, but is not limited to, the following steps.

At step S801, information of a TRP sent by a first node is received.

In some embodiments, the information of the mobile TRP sent by the first node is received by the second node, which is not limited here.

In some embodiments, the information of the mobile TRP sent by an IAB-donor is received by an LMF entity, which is not limited here.

At step S802, a position of a UE is determined based on the information of the mobile TRP.

In some embodiments, after receiving the information of the TRP sent by the first node, the second node may determine the position of the UE based on the information of the mobile TRP, which is not limited here.

In some embodiments, after receiving the information of the TRP sent by the first node, the second node may determine position information of the mobile TRP based on the information of the mobile TRP, and further determine the position of the UE, which is not limited here.

In some embodiments, in the process of determining the position of the UE by using the information of the mobile TRP, the position of the UE may be determined based on the position of the mobile TRP, or the position of the UE may be calculated by performing a UE positioning procedure based on the information of the mobile TRP, which is not limited here.

Therefore, the second node receives the information of the mobile TRP sent by the first node, and determines the position of the UE based on the information of the mobile TRP, and thus the second node can obtain the information of the mobile TRP in a timely manner and determine the position of the UE based on the information of the mobile TRP, which effectively improves the timeliness of acquisition of the information of the mobile TRP and improves the positioning effect.

FIG. 9 is a flowchart of a positioning method provided by an embodiment of the disclosure. It should be noted that the positioning method in the embodiment is performed by a second node, such as a node for location management. The node for location management may be a node responsible for providing location services, and the second node may be an LMF entity, which is not limited here. The method includes, but is not limited to, the following steps.

At step S901, request information is sent to a first node, in which the request information includes first information for requesting a mobile TRP.

In some embodiments, the second node may send the request information to the first node, which includes the first information for requesting the mobile TRP, so as to request information of the mobile TRP based on the first information for requesting the mobile TRP, which is not limited here.

In some embodiments, an LMF entity may send request information to an IAB-donor, which includes first information for requesting a mobile TRP, so as to request information of the mobile TRP based on the first information for requesting the mobile TRP, which is not limited here.

At step S902, the information of the mobile TRP sent by the first node in response to the first information for requesting the mobile TRP is received.

In some embodiments, after receiving the request information sent by the second node, the first node may obtain the information of the mobile TRP based on the first information for requesting the mobile TRP, and feedback the information of the mobile TRP to the second node, which is not limited here.

At step S903, a position of a UE is determined based on the information of the mobile TRP.

The second node may send the request information to the first node, which includes the first information for requesting the mobile TRP, and receives the information of the mobile TRP sent by the first node in response to the first information for requesting the mobile TRP, and then determines the position of the UE based on the information of the mobile TRP, which effectively improves the timeliness of acquisition of the information of the mobile TRP and improves the positioning effect while realizing on-demand acquisition of the information of the mobile TRP.

The request information is included in a first request message sent by the second node to the first node.

In some embodiments, if the first node is an NG-RAN node and the second node is an LMF, the first request message may be an NRPPa message sent by the LMF to the NG-RAN node.

In some embodiments, the NRPPa message may be a non-UE associated NRPPa message and/or a UE associated NRPPa message.

In some embodiments, the NRPPa message may be a TRP information request message, a measurement request message, and/or a measurement update message, which is not limited here.

In some embodiments, if the request information is included in a TRP information request message, the request information may be a new type of TRP information, and the first node indicates a fourth node to perform positioning according to the new type of TRP information, so as to obtain position and/or speed information of a mobile TRP corresponding to the fourth node.

In some embodiments, if the request information is included in a TRP information request message, the request information may be a new type of TRP information, and the first node feeds back the information of the mobile TRP to the second node according to the new type of TRP information.

According to the positioning method provided by the embodiment of the disclosure, the second node may send a request message related to a TRP to the first node, and the second node receives the information of the mobile TRP sent by the first node in response to that the requested TRP is mobile, or it is provided by a mobile node or is on the mobile node, to realize on demand acquisition of the information of the mobile TRP, which effectively improves the timeliness of acquisition of the information of the mobile TRP.

In some embodiments, in a case that the first node is an IAB-donor (or an NG-RAN node) and the second node is an LMF, if the first node receives a request message related to a TRP from the second node, if the requested TRP is on the IAB -node, or if it is determined that the requested TRP is mobile, the first node includes the information of the mobile TRP in a feedback message.

In the positioning method provided by the embodiment of the disclosure, the second node may receive a first feedback message sent by the first node, which includes the information of the mobile TRP. Because the first feedback message is reused to receive the information of the mobile TRP sent by the first node, a transmission overhead of the information of the mobile TRP can be reduced.

In the positioning method provided by the embodiment of the disclosure, the first node sends a first update message to the second node, which includes the information of the mobile TRP. For the change of the information of the mobile TRP, directly sending the update message to the second node can reduce the transmission overhead of the information of the mobile TRP and improve the efficiency of updating the information of the mobile TRP.

In some embodiments, the first update message is an update message generated by the first node in response to the update of the information of the mobile TRP after sending the first feedback message, which is not limited here.

In some embodiments, if the first node is an NG-RAN node and the second node is an LMF, the first feedback message or the first update message may be an NRPPa message sent by the LMF to the NG-RAN node.

In some embodiments, the NRPPa message may be a non-UE associated NRPPa message and/or a UE associated NRPPa message.

In some embodiments, the NRPPa message may be a TRP information feedback message, a measurement feedback message, and/or a measurement update message, which is not limited here.

FIG. 10 is a schematic flowchart of a positioning method provided by an embodiment of the disclosure. It should be noted that the positioning method in the embodiment is performed by a third node, such as a source service IAB-donor-CU of a fourth node (for example, an IAB-node) where a mobile TRP is located, which is not limited here. The method includes, but is not limited to, the following step.

At step S1001, second information for updating a mobile TRP is determined, in which the second information for updating the mobile TRP is used for a first node to send information of the mobile TRP, and the information of the mobile TRP is used for determining a position of a UE.

In some embodiments of the disclosure, the second information for updating the mobile TRP may include an LMF node ID, used to indicate a node to which the information of the mobile TRP needs to be sent; a transaction ID, used to indicate a transaction ID corresponding to a transmission of the information of the mobile TRP; an old NG-RAN node ID, used to indicate an old NG-RAN node ID corresponding to the information of the mobile TRP; and an old TRP ID, used to indicate one or more mobile TRP IDs corresponding to the information of the mobile TRP on an old NG-RAN node, which is not limited here.

In some embodiments, the third node is a source service IAB-donor-CU of the fourth node (for example, IAB-node) where the mobile TRP is located.

In some embodiments of the disclosure, the second information for updating the TRP determined by the third node may be used for the first node to send the information of the mobile TRP to the second node, which is not limited here.

In the embodiment, the third node determines the second information for updating the mobile TRP, which is used for the first node to send the information of the mobile TRP, so as to determine the position of the UE based on the information of the mobile TRP, which effectively improves the timeliness of acquisition of the information of the mobile TRP and improves the positioning effect.

In some embodiments of the disclosure, the third node may send the second information for updating the mobile TRP to the first node, which is not limited here.

In some embodiments, the IAB-node where the mobile TRP is located undergoes DU migration, and the third node serving as a source IAB-donor-CU sends the second information for updating the mobile TRP to the first node serving as a target IAB - donor-CU via an XnAP message, which is not limited here.

In some embodiments, the XnAP message is a message for IAB-node or IAB-DU migration, which is not limited here.

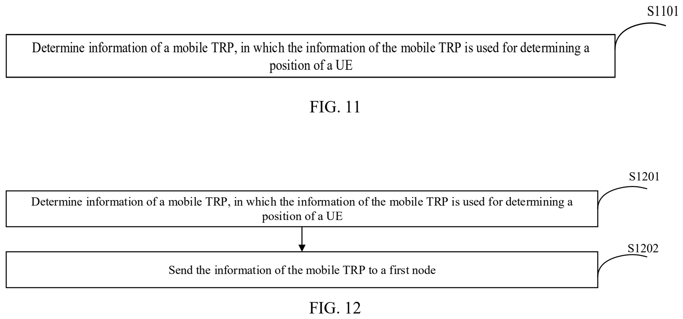

FIG. 11 is a schematic flowchart of a positioning method provided by an embodiment of the disclosure. It should be noted that the positioning method in the embodiment is performed by a fourth node, such as an IAB-node, which is not limited here. The method includes, but is not limited to, the following step.

At step S1101, information of a mobile TRP is determined, in which the information of the mobile TRP is used for determining a position of a UE.

In some embodiments, the information of the mobile TRP is determined by the fourth node, in which the information of the mobile TRP is used to determine the position of the UE, which is not limited here.

In some embodiments, the information of the TRP is determined by the IAB-node, in which the information of the mobile TRP is used to determine the position of the UE, which is not limited here.

In some embodiments, the mobile TRP refers to a TRP in motion, which is not limited here.

In some embodiments, the mobile TRP is on the fourth node, which is not limited here.

In some embodiments, the UE may obtain the information of the mobile TRP through an LMF for positioning, which is not limited here.

In some embodiments, the UE may receive a positioning signal from the mobile TRP for positioning signal measurement, which is not limited here.

In some embodiments, the mobile TRP may receive a positioning signal from the UE for positioning signal measurement, which is not limited here.

In some embodiments, the information of the TRP refers to information related to the TRP, which is not limited here.

In the embodiment, the fourth node determines the information of the mobile TRP, which is used to determine the position of the UE, so as to ensure that the information of the mobile TRP can be effectively obtained to support the determination of the position of the UE.

FIG. 12 is a schematic flowchart of a positioning method provided by an embodiment of the disclosure. It should be noted that the positioning method in the embodiment is performed by a fourth node, e.g., an IAB node or a mobile IAB node, which is not limited here. The method includes, but is not limited to, the following steps.

At step S1201, information of a mobile TRP is determined, in which the information of the mobile TRP is used for determining a position of a UE.

At step S1202, the information of the mobile TRP is sent to a first node.

Therefore, the fourth node determines the information of the mobile TRP, which is used to determine the position of the UE, and sends the information of the mobile TRP to the first node, so that the first node can obtain the information of the mobile TRP in a timely manner, which improves the timeliness of acquisition of the information of the mobile TRP.

In the positioning method provided by the embodiment of the disclosure, the fourth node may receive request information sent by the first node, in which the request information includes first information for requesting the mobile TRP, and sends the information of the mobile TRP to the first node in response to the first information for requesting the mobile TRP, so that the first node can obtain the information of the mobile TRP as required.

The request information is included in a second request message sent by the first node to the fourth node.

In some embodiments, if the first node is an IAB-donor (or an IAB-donor-CU) and the second node is an IAB-node, a first request message may be an F1AP message sent by the IAB-donor-CU to the IAB-node, which is not limited here.

In some embodiments, the F1AP message may be a non-UE associated F1AP message and/or a UE associated F1AP message, which is not limited here.

In some embodiments, the F1AP message may be a TRP information request message and/or a measurement request message, which is not limited here.

In some embodiments, if request information is included in a TRP information request message, the request information may be a new type of TRP information, and the fourth node (or the UE on the fourth node) performs positioning according to the new type of TRP information to obtain position and/or speed information of a mobile TRP corresponding to the fourth node, which is not limited here.

In some embodiments, if request information is included in a TRP information request message, the request information may be a new type of TRP information type, and the fourth node feeds back information of a mobile TRP to the first node according to the new type of TRP information, which is not limited here.

In the positioning method provided by the embodiment of the disclosure, the fourth node may receive a request message related to a TRP sent by the first node, and send the information of the mobile TRP to the first node in response to that the requested TRP is mobile, or it is provided by a mobile node or is on the mobile node, or the information of the mobile TRP changes. The fourth node includes the mobile TRP.

In some embodiments, the fourth node receives the request message related to the TRP sent by the first node, and determine whether the TRP requested by the first node is mobile, or whether it is provided by the mobile node or is on the mobile node (e.g., an IAB-node), or whether the information of the mobile TRP changes. If the requested TRP is mobile, or it is provided by the mobile node or is on the mobile node, or the information of the mobile TRP changes, the fourth node sends the information of the mobile TRP to the first node, and the first node receives the information of the mobile TRP sent by the fourth node in response to that the requested TRP is mobile, or it is provided by the mobile node or is on the mobile node, or the information of the mobile TRP changes, so as to determine the position of the UE based on the information of the mobile TRP, which is not limited here.

In the positioning method provided by the embodiment of the disclosure, the fourth node may send a second feedback message to the first node, in which the second feedback message includes the information of the mobile TRP.

Examples are provided as follows.
1. A first node (e.g., an IAB-donor or an IAB-donor-CU) sends information of a fourth node (which may be an optional example of the mobile TRP information) to a second node (e.g., an LMF), which is used for positioning a UE. The UE may receive a positioning signal from the fourth node and/or the fourth node may receive a positioning signal sent by the UE.
2. Based on 1, the first node sends the information of the fourth node to the second node according to a protocol or according to information for requesting the fourth node sent by the second node (which may be an optional example of the first information for requesting the mobile TRP).
3. Based on 1, the first node receives the information of the fourth node from the fourth node (which may be an optional example of the mobile TRP information) and sends the information of the fourth node to the second node.
4. Based on 3, the fourth node sends the information of the fourth node according to a protocol or according to received information for requesting the fourth node sent by the first node.
5. Based on 2 or 3, the information for requesting the fourth node includes at least one of the following:
   a mobile TRP information request, used to indicate a request for information of a mobile TRP;
   a cell ID list, in which the cell ID list includes one or more cell IDs and is used to indicate a request for information of a mobile TRP corresponding to the cell, and the cell ID is a CGI;
   an update request indication, used to indicate a request for updated information in response to a change of information;
   an IAB-MT ID request, used to indicate a request for an IAB-MT ID;
   a position information request, used to indicate a request for geographic position information of a mobile TRP; or
   a speed information request, used to indicate a request for speed information of a mobile TRP.
6. Based on 1-5, if the information used to request the fourth node includes the cell ID list, the fourth node sends information of a TRP corresponding to the cell in the cell ID list to the first node and/or the first node sends it to the second node.
7. Based on 1-5, if the information for requesting the fourth node includes the update request indication, if the information of the fourth node changes, the fourth node sends the updated information of the fourth node to the first node and/or the first node sends it to the second node. The updated information of the fourth node is an optional example of the updated information of the mobile TRP.
   In some embodiments, through enhancement of non-UE associated message (i.e., TRP information exchange), an IAB-DU (which may be an optional example of the fourth node) can provide position update in a timely manner, which is not limited here.
8. Based on 1-5, if the information used to request the fourth node includes the IAB-MT ID request, when the fourth node sends a positioning-related measurement feedback message to the first node and/or the first node sends it to the second node, IAB-MT ID information corresponding to a TRP ID participating in positioning is included in the feedback message.
9. Based on 1-5, if the information used to request the fourth node includes the position information request and/or the speed information request, when the fourth node sends a positioning-related measurement feedback message to the first node and/or the first node sends it to the second node, real-time position information and/or speed information may be included in the feedback message.

In some embodiments, through enhancement of UE associated message (i.e., a measurement configuration or a measurement message related to UE positioning), the position information and/or the speed information of IAB-MT can be added every time the IAB-DU performs a positioning signal transmission or measurement, so that the LMF (which is an optional example of the second node) can obtain the real-time TRP position information and more accurately position the UE, which is not limited here.

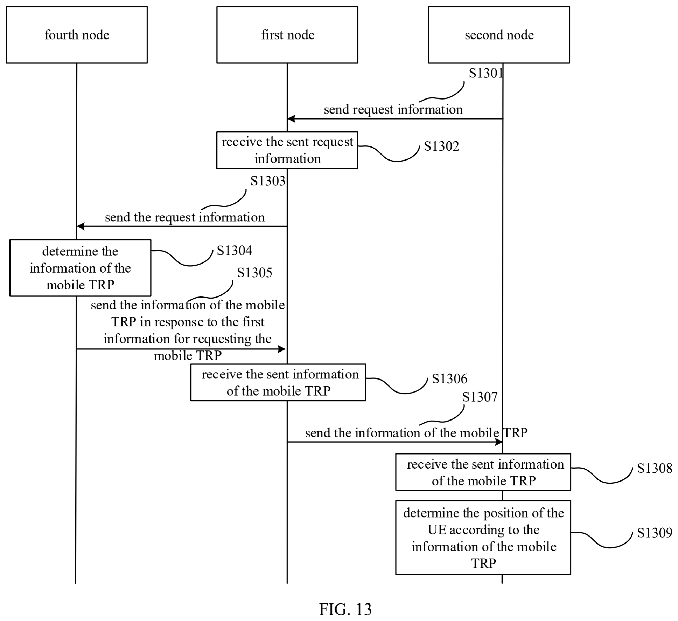

FIG. 13 is a schematic flowchart of a positioning method provided by an embodiment of the disclosure. It should be noted that the positioning method of the embodiment illustrates interactions among a first node, a second node and a fourth node, which is not limited here. The method includes, but is not limited to, the following steps.

At step S1301, the second node sends request information to the first node, in which the request information includes first information for requesting a mobile TRP, and information of the mobile TRP is used to determine a position of a UE.

At step S1302, the first node receives the request information sent by the second node.

At step S1303, the first node sends the request information to the fourth node.

At step S1304, the fourth node determines the information of the mobile TRP.

At step S1305, the fourth node sends the information of the mobile TRP to the first node in response to the first information for requesting the mobile TRP.

At step S1306, the first node receives the information of the mobile TRP sent by the fourth node.

At step S1307, the first node sends the information of the mobile TRP to the second node.

At step S1308, the second node receives the information of the mobile TRP sent by the first node.

At step S1309, the second node determines the position of the UE based on the information of the mobile TRP.

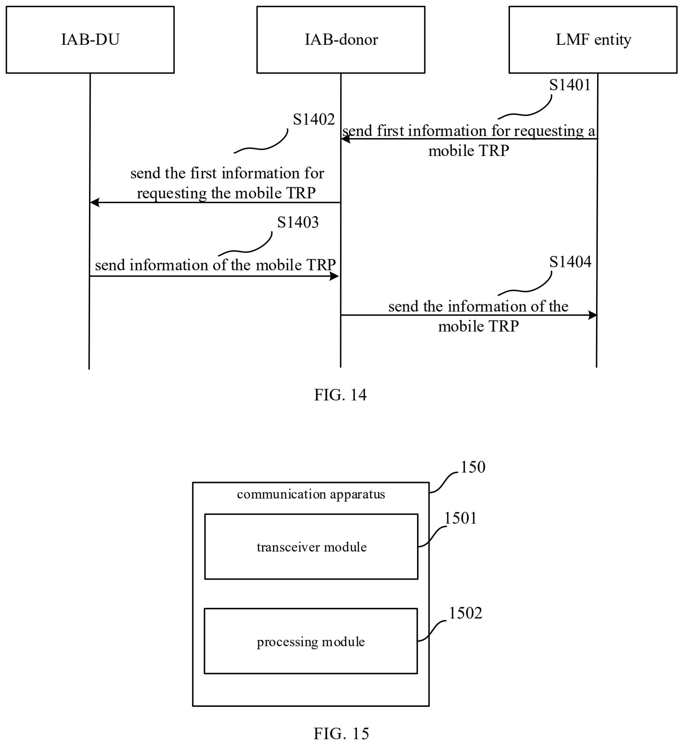

FIG. 14 is a schematic flowchart of a positioning method provided by an embodiment of the disclosure. It should be noted that the positioning method of the embodiment illustrates interactions among a first node, a second node and a fourth node, which is not limited here. The method includes, but is not limited to, the following steps.

In FIG. 14, by way of example, the first node is an IAB-donor, the second node is an LMF entity, and the fourth node is an IAB-DU, which is not limited here.

At step S1401, the LMF entity sends first information for requesting a mobile TRP to the IAB-donor (also called gNB or IAB-donor-CU).

The first information for requesting the mobile TRP includes at least one of the following request information:
a mobile TRP information request, used to indicate a request for information of a mobile TRP;
a cell ID list, in which the cell ID list includes one or more cell IDs and is used to indicate a request for information of a mobile TRP corresponding to the cell, and the cell ID is a CGI;
an update request indication, used to indicate the IAB-MT to provide updated information;
an IAB-MT ID request, used to indicate a request for an IAB-MT ID;
a position information request, used to indicate a request for geographic position information of a mobile TRP; or
a speed information request, used to indicate a request for speed information of a mobile TRP.

In some embodiments, the first information for requesting the mobile TRP is included in a non-UE associated NRPPa message sent by the LMF entity to an NG-RAN node (i.e., IAB-donor-CU), and the non-UE associated NRPPa message may be, for example, a TRP information request message.

In other embodiments, the first information for requesting the mobile TRP is included in a UE associated NRPPa message sent by the LMF entity to the NG-RAN node.

The UE associated NRPPa message may be, for example, a MEASUREMENT REQUEST message, a MEASUREMENT UPDATE message, a POSITIONING INFORMATION REQUEST message, a positioning information request message, a positioning reference signal (PRS) CONFIGURATION REQUEST message, or an observed time difference of arrival (OTDOA) INFORMATION REQUEST message, which is not limited here.

At step S1402, the IAB-donor (also called gNB or IAB-donor-CU) sends the first information for requesting the mobile TRP to the IAB-DU, and the specific content of the information is consistent with that described in S1401, which will not be repeated here.

In some embodiments, the first information for requesting the mobile TRP is included in a non-UE associated F1AP message sent by the IAB-donor (i.e., gNB-CU) to the IAB-DU (i.e. gNB-DU), and the non-UE associated F1AP message may be a TRP INFORMATION REQUEST message.

In other embodiments, the first information for requesting the mobile TRP is included in a UE associated F1AP message sent by the IAB-donor to the IAB-DU. The UE associated F1AP message may be, for example, a MEASUREMENT REQUEST message, a MEASUREMENT UPDATE message, a POSITIONING INFORMATION REQUEST message, a PRS CONFIGURATION REQUEST message, an OTDOA INFORMATION REQUEST message, etc., which is not limited here.

At step S1403, if the first information for requesting the mobile TRP is included in the above message or based on a protocol, the IAB-DU includes the information of the mobile TRP in a feedback message (which may be an optional example of the second feedback message) when sending the corresponding feedback message. The information of the mobile TRP includes at least one of the following: TRP information corresponding to a requested cell, a UE ID of a mobile TRP, geographic position information of a mobile TRP, speed information of a mobile TRP and a corresponding timestamp.

In some embodiments, the feedback message (which may be an optional example of the second feedback message) includes: a TRP INFORMATION RESPONSE message, a POSITIONING INFORMATION RESPONSE message, a POSITIONING INFORMATION UPDATE message, a POSITIONING ACTIVATION RESPONSE message, a MEASUREMENT RESPONSE message, and a MEASUREMENT UPDATE message.

At step S1404, when the IAB-donor sends the feedback message in step S1401 (which can be an optional example of the first feedback message or the first update message) to the LMF entity, the information of the mobile TRP is included in the feedback message, and the specific content is the same as that described in step 103, which will not be repeated here.

In some embodiments, the feedback message (which may be an optional example of the first feedback message or the first update message) includes: a TRP INFORMATION RESPONSE message, a TRP INFORMATION UPDATE message, a POSITIONING INFORMATION RESPONSE message, a POSITIONING INFORMATION UPDATE message, a POSITIONING ACTIVATION RESPONSE message, a MEASUREMENT RESPONSE message, and a MEASUREMENT UPDATE message.

FIG. 15 is a schematic structural diagram of a communication apparatus 150 provided by an embodiment of the disclosure. The communication apparatus 150 in FIG. 15 includes a transceiver module 1501 and a processing module 1502. The transceiver module 1501 includes a sending module and/or a receiving module. The sending module is used for implementing a sending function, and the receiving module is used for implementing a receiving function, so that the transceiver module 1501 can implement the sending function and/or the receiving function.

The communication apparatus 150 may be a network device (e.g., the first node, the second node or the fourth node in the above method embodiments), a device in the network device, or a device that can be used together with the network device.

If the communication apparatus 150 is on a first node side, the apparatus includes:
the transceiver module 1501, configured to send information of a TRP to a second node, in which the information of the mobile TRP is used to determine a position of a UE.

In the embodiment, since the first node sends the information of the TRP to the second node, and the information of the mobile TRP is used to determine the position of the UE, the second node can obtain the information of the mobile TRP in a timely manner and determine the position of the UE based on the information of the mobile TRP, which effectively improves the timeliness of acquisition of the information of the mobile TRP and improves the positioning effect.

If the communication apparatus 150 is on a second node side, the apparatus includes:
the transceiver module 1501, configured to receive information of a TRP sent by a first node; and
the processing module 1502, configured to determine a position of a UE according to the information of the mobile TRP.

In the embodiment, the second node receives the information of the TRP sent by the first node, and determines the position of the UE according to the information of the mobile TRP. In this way, the second node can obtain the information of the mobile TRP in a timely manner and determine the position of the UE based on the information of the mobile TRP, which effectively improves the timeliness of acquisition of the information of the mobile TRP and improves the positioning effect.

If the communication apparatus 150 is on a third node side, the apparatus includes:
the processing module 1502, configured to determine second information for updating a TRP, in which the second information for updating the mobile TRP is used for a first node to send information of the mobile TRP, and the information of the mobile TRP is used for determining a position of a UE.

In the embodiment, the third node determines the second information for updating the TRP, in which the second information for updating the mobile TRP can be used for the first node to send the information of the mobile TRP, and the information of the mobile TRP is used to determine the position of the UE based on the information of the mobile TRP, which effectively improves the timeliness of acquisition of the information of the mobile TRP and improves the positioning effect.

If the communication apparatus 150 is on a fourth node side, the apparatus includes:
the processing module 1502, configured to determine information of a TRP, in which the information of the mobile TRP is used for determining a position of a UE.

In the embodiment, the fourth node may determine the information of the TRP, which is used to determine the position of the UE, to ensure that the information of the mobile TRP can be obtained effectively to support the determination of the position of the UE.

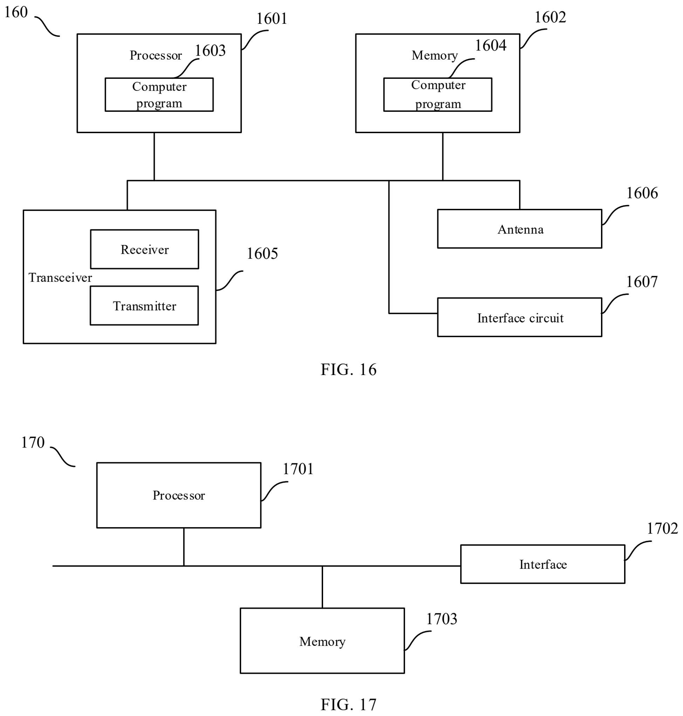

FIG. 16 is a schematic structural diagram of another communication device 160 provided by an embodiment of the disclosure. The communication device 160 may be a network device (e.g., the first node, the second node, the third node and the fourth node in the above method embodiments), or a chip, a chip system or a processor that supports the network device to implement the above method. The device can be used to implement the method described in the above method embodiments, and details can refer to the description of the above method embodiments.

The communication device 160 may include one or more processors 1601. The processor 1601 may be a general purpose processor or a dedicated processor, such as, a baseband processor or a central processor. The baseband processor is used for processing communication protocols and communication data. The central processor is used for controlling the communication device (e.g., base station, baseband chip, UE, UE chip, DU or CU), executing computer programs, and processing data of the computer programs.

In an embodiment of the disclosure, the communication device 160 includes one or more memories 1602. The memory 1602 stores a computer program 1604, and the processor 1601 may store a computer program 1603. The processor 1601 enables the communication device 160 to implement the method described in the above method embodiments by executing the computer program 1604 and/or the computer program 1603.

In an embodiment of the disclosure, the memory 1602 may also store data. The communication device 160 and the memory 1602 may be provided separately or may be integrated together.

In an embodiment of the disclosure, the communication device 160 may also include a transceiver 1605 and an antenna 1606. The transceiver 1605 may be referred to as transceiver unit, transceiver machine or transceiver circuit, for realizing a transceiver function. The transceiver 1605 may include a receiver and a transmitter. The receiver may be referred to as receiver machine or receiving circuit, for realizing a receiving function. The transmitter may be referred to as transmitter machine or transmitting circuit, for realizing a transmitting function.

In an embodiment of the disclosure, the communication device 160 may also include one or more interface circuits 1607. The interface circuits 1607 are used to receive code instructions and transmit the code instructions to the processor 1601. The processor 1601 runs the code instructions to cause the communication device 160 to implement the methods described in the method embodiments.

In an implementation, the processor 1601 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1601 may store a computer program 1603, which is used to cause the communication device 160 to implement the methods described in the above method embodiments when being executed by the processor 1601. The computer program 1603 may be solidified in the processor 1601, in which case the processor 1601 may be implemented by hardware.

In an implementation, the communication device 160 may include circuits. The circuits are used to implement the transmitting, receiving or communicating function in the above method embodiments. The processor and the transceiver described in the disclosure may be implemented on integrated circuits (ICs), analog ICs, radio frequency ICs (RFICs), mixed signal ICs, application specific ICs (ASICs), printed circuit boards (PCBs), and electronic devices. The processor and the transceiver may be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiment may be a network device (e.g., the first node, the second node, the third node and the fourth node in the above method embodiments), but the scope of the communication device described in the disclosure is not limited thereto, and the structure of the communication device is not limited by FIG. 16. The communication device may be a stand-alone device or may be part of a larger device. For example, the communication device may be:
(1) a stand-alone IC, chip, chip system or subsystem;
(2) a collection of ICs including one or more ICs, in an embodiment of the disclosure, the collection of ICs may also include storage components for storing data and computer programs;
(3) an ASIC, such as a modem;
(4) modules that can be embedded within other devices;
(5) receivers, UEs, smart UEs, cellular phones, wireless devices, handheld machines, mobile units, in-vehicle devices, network devices, cloud devices, artificial intelligence devices, and the like; and
(6) others.

The case that the communication device is a chip or a chip system can refer to the schematic structural diagram of a chip shown in FIG. 17. The chip shown in FIG. 17 includes a processor 1701 and an interface 1702. There may be one or more processors 1701, and there may be a plurality of interfaces 1702.

For the case that the chip is used to implement the functions of the network device (e.g., the first node, the second node, the third node and the fourth node in the above method embodiments) in the embodiments of the disclosure,
the processor 1701 is configured to implement various steps in the above-mentioned FIGs. 2-14.

In an embodiment of the disclosure, the chip also includes a memory 1703 for storing necessary computer programs and data.

Those skilled in the art understand that various illustrative logical blocks and steps listed in the embodiments of the disclosure may be implemented by an electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

An embodiment of the disclosure also provides a communication system. The communication system includes a communication device acting as a network device (e.g., the first node, the second node, the third node and the fourth node in the above method embodiments) in the above embodiments. Or, the system includes a communication device acting as a network device (e.g., the first node, the second node, the third node and the fourth node in the above method embodiments) in the above embodiment of FIG. 16.

The disclosure also provides a readable storage medium for storing instructions. When the instructions are executed by a computer, the function of any of the above method embodiments is implemented.

The disclosure also provides a computer program product. When the computer program product is executed by a computer, the function of any of the above method embodiments is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs)) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second" and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "a plurality of" may be two, three, four or more, which is not limited in the disclosure. In the embodiment of the disclosure, for a type of technical features, "first", "second" and "third", and "A", "B", "C" and "D" are used to distinguish different technical features of the type, the technical features described using "first", "second" and "third", and "A", "B", "C" and "D" do not indicate any order of precedence or magnitude.

The correspondences shown in the tables in the disclosure may be configured or predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in the disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in the disclosure may be understood as define, predefine, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and the design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, which will not be repeated herein.

The above are only specific implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A positioning method, performed by a first node, comprising:
sending information of a mobile transmission and reception point (TRP) to a second node, wherein the information of the mobile TRP is used to determine a position of a user equipment (UE).

2. The method of claim 1, wherein sending the information of the mobile TRP to the second node comprises:
receiving request information sent by the second node, wherein the request information comprises first information used for requesting the mobile TRP; and
sending the information of the mobile TRP to the second node according to the first information used for requesting the mobile TRP.

3. The method of claim 2, wherein receiving the request information sent by the second node comprises:
receiving a first request message sent by the second node, wherein the first request message comprises the request information, and the first request message comprises at least one of:
a non-UE associated new radio positioning protocol A (NRPPa) message; or
a UE associated NRPPa message.

4. The method of claim 1, wherein sending the information of the mobile TRP to the second node comprises:
receiving request information related to a TRP sent by the second node; and
if the TRP requested is mobile, provided by a mobile node or located on a mobile node, or if the information of the mobile TRP changes, sending the information of the mobile TRP to the second node.

5. The method of claim 1, wherein sending the information of the mobile TRP to the second node comprises:
receiving second information used for updating the mobile TRP sent by a third node; and
sending the information of the mobile TRP to the second node according to the second information used for updating the mobile TRP.

6. The method of claim 5, wherein the second information used for updating the mobile TRP comprises at least one of:
a location management function (LMF) node identifier (ID);
a transaction ID;
an old next generation radio access network (NG-RAN) node ID; or
an old TRP ID.

7. The method of any one of claims 2-6, wherein sending the information of the mobile TRP to the second node comprises:
sending a first feedback message to the second node, wherein the first feedback message comprises the information of the mobile TRP; or
sending a first update message to the second node, wherein the first update message comprises the information of the mobile TRP.

8. The method of any one of claims 1-7, further comprising:
receiving the information of the mobile TRP sent by a fourth node, wherein the fourth node comprises the mobile TRP.

9. The method of claim 8, wherein receiving the information of the mobile TRP sent by the fourth node comprises:
sending request information to the fourth node, wherein the request information comprises first information used for requesting the mobile TRP; and
receiving the information of the mobile TRP sent by the fourth node in response to the first information used for requesting the mobile TRP.

10. The method of claim 9, wherein sending the request information to the fourth node comprises:
sending a second request message to the fourth node, wherein the second request message comprises the request information, and the second request message comprises at least one of:
a non-UE associated F1 application protocol (F1AP) message; or
a UE associated F1AP message.

11. The method of claim 6, wherein receiving the information of the mobile TRP sent by the fourth node comprises:
sending request information related to a TRP to the fourth node; and
receiving the information of the mobile TRP sent by the fourth node in response to the TRP requested being mobile, provided by a mobile node or located on a mobile node, or a change in the information of the mobile TRP, wherein the fourth node comprises the mobile TRP.

12. The method of any one of claims 8-11, wherein receiving the information of the mobile TRP sent by the fourth node comprises:
receiving a second feedback message sent by the fourth node, wherein the second feedback message comprises the information of the mobile TRP.

13. The method of any one of claims 2-12, wherein the request information comprises at least one of:
a mobile TRP information request, wherein the mobile TRP information request indicates a request for the information of the mobile TRP;
a cell ID list, wherein the cell ID list comprises at least one cell ID, and the cell ID list indicates a request for information of a mobile TRP corresponding to the at least one cell ID;
an update request indication, wherein the update request indication indicates a request for updated information of the mobile TRP;
an integrated access and backhaul-mobile termination (IAB-MT) ID request, wherein the IAB-MT ID request indicates a request for an IAB-MT ID corresponding to a TRP;
a position information request, wherein the position information request indicates a request for geographic position information of the mobile TRP; or
a speed information request, wherein the speed information request indicates a request for speed information of the mobile TRP.

14. The method of claim 13, wherein the information of the mobile TRP comprises at least one of:
information of a mobile TRP corresponding to a cell ID in a cell ID list;
updated information of the mobile TRP;
information of an IAB-MT ID corresponding to the mobile TRP;
motion state information;
position information of the mobile TRP and/or a timestamp corresponding to the position information; or
speed information of the mobile TRP and/or a timestamp corresponding to the speed information.

15. A positioning method, performed by a second node, comprising:
receiving information of a mobile transmission and reception point (TRP) sent by a first node; and
determining a position of a user equipment (UE) based on the information of the mobile TRP.

16. The method of claim 15, wherein receiving the information of the mobile TRP sent by the first node comprises:
sending request information to the first node, wherein the request information comprises first information for requesting the mobile TRP; and
receiving the information of the mobile TRP sent by the first node in response to the first information for requesting the mobile TRP.

17. The method of claim 16, wherein sending the request information to the first node comprises:
sending a first request message to the first node, wherein the first request message comprises the request information, and the first request message comprises at least one of:
a non-UE associated new radio positioning protocol A (NRPPa) message; or
a UE associated NRPPa message.

18. The method of claim 15, wherein receiving the information of the mobile TRP sent by the first node comprises:
sending request information related to a TRP to the first node; and
receiving the information of the mobile TRP sent by the first node in response to the TRP requested being mobile, provided by a mobile node or located on a mobile node, or a change in the information of the mobile TRP.

19. The method of any one of claims 16-18, wherein receiving the information of the mobile TRP sent by the first node comprises:
receiving a first feedback message sent by the first node, wherein the first feedback message comprises the information of the mobile TRP; or
receiving a first update message sent by the first node, wherein the first update message comprises the information of the mobile TRP.

20. The method of any one of claims 16-19, wherein the request information comprises at least one of:
a mobile TRP information request, wherein the mobile TRP information request indicates a request for the information of the mobile TRP;
a cell ID list, wherein the cell ID list comprises at least one cell ID, and the cell ID list indicates a request for information of a mobile TRP corresponding to the at least one cell ID;
an update request indication, wherein the update request indication indicates a request for updated information of the mobile TRP;
an integrated access and backhaul-mobile termination (IAB-MT) ID request, wherein the IAB-MT ID request indicates a request for an IAB-MT ID corresponding to a TRP;
a position information request, wherein the position information request indicates a request for geographic position information of the mobile TRP; or
a speed information request, wherein the speed information request indicates a request for speed information of the mobile TRP.

21. The method of claim 20, wherein the information of the mobile TRP comprises at least one of:
information of a mobile TRP corresponding to a cell ID in a cell ID list;
updated information of the mobile TRP;
information of an IAB-MT ID corresponding to the mobile TRP;
motion state information;
position information of the mobile TRP and/or a timestamp corresponding to the position information; or
speed information of the mobile TRP and/or a timestamp corresponding to the speed information.

22. A positioning method, performed by a third node, comprising:
determining second information for updating a transmission and reception point (TRP), wherein the second information for updating the mobile TRP is used for a first node to send information of the mobile TRP, and the information of the mobile TRP is used for determining a position of a user equipment (UE).

23. The method of claim 22, further comprising:
sending the second information for updating the mobile TRP to the first node.

24. The method of any one of claims 22-23, wherein the second information used for updating the mobile TRP comprises at least one of:
a location management function (LMF) node identifier (ID);
a transaction ID;
an old next generation radio access network (NG-RAN) node ID; or
an old TRP ID.

25. The method of any one of claims 22-24, wherein the information of the mobile TRP comprises at least one of:
information of a mobile TRP corresponding to a cell ID in a cell ID list;
updated information of the mobile TRP;
information of an integrated access and backhaul-mobile termination (IAB-MT) ID corresponding to the mobile TRP;
motion state information;
position information of the mobile TRP and/or a timestamp corresponding to the position information; or
speed information of the mobile TRP and/or a timestamp corresponding to the speed information.

26. A positioning method, performed by a fourth node, comprising:
determining information of a mobile transmission and reception point (TRP), wherein the information of the mobile TRP is used for determining a position of a user equipment (UE).

27. The method of claim 26, further comprising:
sending the information of the mobile TRP to a first node.

28. The method of claim 27, wherein sending the information of the mobile TRP to the first node comprises:
receiving request information sent by the first node, wherein the request information comprises first information used for requesting the mobile TRP; and
sending the information of the mobile TRP to the first node in response to the first information used for requesting the mobile TRP.

29. The method of claim 28, wherein receiving the request information sent by the first node comprises:
receiving a second request message sent by the first node, wherein the second request message comprises the request information, and the second request message comprises at least one of:
a non-UE associated F1 application protocol (F1AP) message; or
a UE associated F1AP message.

30. The method of claim 27, wherein sending the information of the mobile TRP to the first node comprises:
receiving request information related to a TRP sent by the first node; and
in response to the TRP requested being mobile, provided by a mobile node or located on a mobile node, or a change in the information of the mobile TRP, sending the information of the mobile TRP to the first node, wherein the fourth node comprises the mobile TRP.

31. The method of any one of claims 28-30, wherein sending the information of the mobile TRP to the first node comprises:
sending a second feedback message to the first node, wherein the second feedback message comprises the information of the mobile TRP.

32. The method of any one of claims 28-31, wherein the request information comprises at least one of:
a mobile TRP information request, wherein the mobile TRP information request indicates a request for the information of the mobile TRP;
a cell ID list, wherein the cell ID list comprises at least one cell ID, and the cell ID list indicates a request for information of a mobile TRP corresponding to the at least one cell ID;
an update request indication, wherein the update request indication indicates a request for updated information of the mobile TRP;
an integrated access and backhaul-mobile termination (IAB-MT) ID request, wherein the IAB-MT ID request indicates a request for an IAB-MT ID corresponding to a TRP;
a position information request, wherein the position information request indicates a request for geographic position information of the mobile TRP; or
a speed information request, wherein the speed information request indicates a request for speed information of the mobile TRP.

33. The method of claim 32, wherein the information of the mobile TRP comprises at least one of:
information of a mobile TRP corresponding to a cell ID in a cell ID list;
updated information of the mobile TRP;
information of an IAB-MT ID corresponding to the mobile TRP;
motion state information;
position information of the mobile TRP and/or a timestamp corresponding to the position information; or
speed information of the mobile TRP and/or a timestamp corresponding to the speed information.

34. A communication apparatus, comprising:
a transceiver module, configured to send information of a mobile transmission and reception point (TRP) to a second node, wherein the information of the mobile TRP is used to determine a position of a user equipment (UE).

35. A communication apparatus, comprising:
a transceiver module, configured to receive information of a mobile transmission and reception point (TRP) sent by a first node; and
a processing module, configured to determine a position of a user equipment (UE) based on the information of the mobile TRP.

36. A communication apparatus, comprising:
a processing module, configured to determine second information for updating a transmission and reception point (TRP), wherein the second information for updating the mobile TRP is used for a first node to send information of the mobile TRP, and the information of the mobile TRP is used for determining a position of a user equipment (UE).

37. A communication apparatus, comprising:
a processing module, configured to determine information of a transmission and reception point (TRP), wherein the information of the mobile TRP is used for determining a position of a user equipment (UE).

38. A communication system, comprising a first node, a second node, a third node and a fourth node, wherein the first node implements the method according to any one of claims 1-14, the second node implements the method according to any one of claims 15-21, the third node implements the method according to any one of claims 22-25, and the fourth node implements the method according to any one of claims 26-33.

39. A computer-readable storage medium for storing instructions, wherein when the instructions are executed, the method according to any one of claims 1-33 is implemented.
